# EUROPÄISCHE PATENTSCHRIFT

(11) **EP 3 245 078 B1**
(45) Veröffentlichungstag und Bekanntmachung des Hinweises auf die Patenterteilung: **19.02.2020**
(21) Anmeldenummer: 15794170.9
(22) Anmeldetag: 12.11.2015
(51) Int. Cl.: B60C 11/13, B60C 11/03

(54) **FAHRZEUGLUFTREIFEN**
PNEUMATIC VEHICLE TIRE
PNEUMATIQUE DE VÉHICULE

(30) Priorität: 12.01.2015 DE 102015200234
(43) Veröffentlichungstag der Anmeldung: 22.11.2017
(73) Patentinhaber: Continental Reifen Deutschland GmbH, 30165 Hannover (DE)
(72) Erfinder: HEINHAUPT, Torsten, 29313 Hambühren (DE)
(74) Vertreter: Finger, Karsten
(86) Internationale Anmeldenummer: PCT/EP2015/076416
(87) Internationale Veröffentlichungsnummer: WO 2016/113017

(56) Entgegenhaltungen:
- EP-A1- 0 544 236
- EP-A2- 2 108 531
- WO-A1-2014/136883
- JP-A- H11 342 708

## Beschreibung

Die Erfindung betrifft einen Fahrzeugluftreifen mit einem profilierten Laufstreifen mit einer Umfangsrille, welche nebeneinander angeordnete, radial erhabene Profilelemente voneinander trennt, wobei die Umfangsrille in radialer Richtung R nach innen hin durch einen Rillengrund und axial beiderseits des Rillengrundes jeweils durch eine Rillenwand begrenzt ist, wobei die durch die Umfangsrille getrennten Profilelemente in radialer Richtung R des Reifens nach außen hin durch eine radial äußere Oberfläche und in axialer Richtung A zur Umfangsrille hin jeweils durch eine Flanke begrenzt sind, die sich in radialer Richtung R ausgehend vom Rillengrund bis zur radial äußeren Oberfläche erstrecken und jeweils eine der beiden Rillenwände bilden, wobei an beiden Flanken zu der Umfangsrille hin Ansätze ausgebildet sind, die sich zum Rillengrund hin kontinuierlich verbreitern und in Umfangsrichtung U des Reifens sägezahnförmig gestuft mit alternierend angeordneten ersten Erstreckungsabschnitten der in Umfangsrichtung U gemessenen Länge L, deren größte Erstreckungsrichtungskomponente in Umfangsrichtung U ausgerichtet ist, und mit zweiten Erstreckungsabschnitten der in Umfangsrichtung U gemessenen Länge b, deren größte Erstreckungsrichtungskomponente in axialer Richtung A ausgerichtet ist, mit L > b verlaufen.

Derartige Fahrzeugluftreifen sind beispielsweise aus der DE4138687A1 bekannt. Durch eine derartige Ausbildung können aufgrund der Sägezahnstruktur zusätzliche Griffkanten geschaffen werden, die den Schneegriff verbessern können. Bei dem aus der DE4138687A1 bekannten Fahrzeugluftreifen sind die Sägezahnstrukturen der beiden gegenüberliegenden Flanken in der Umfangsrille dabei so ausgebildet, dass die längeren Erstreckungsabschnitte im Wesentlichen in Umfangsrichtung erstreckt sind und unter Einschluss eines Winkels zur Umfangsrichtung geneigt verlaufen. Dabei sind längs der Umfangserstreckungsrichtung jeweils die ersten Erstreckungsabschnitte der einen Flanke in ihrem Verlauf zur einen axialen Seite hin geneigt und die ersten Erstreckungsabschnitte der anderen Flanke zur anderen axialen Seite hin geneigt ausgerichtet. Durch die gegenläufige ausgebildete Neigungsorientierung der ersten Erstreckungsabschnitte werden zwar zusätzliche Kanten mithilfe des Sägezahns geschaffen. Allerdings unter Reduzierung des offenen Durchflusskanals besonders im Bereich des Rillengrundes. Hierdurch wird der Wasserdurchfluss durch die Umfangsrille und somit die Aquaplaning-Tauglichkeit negativ beeinträchtigt. Gerade bei schmaleren Umfangsrillen kann somit die Aquaplaning-Eigenschaft unerwünscht stark beeinträchtigt werden.

### Aus der EP 2 108 531 A2 ist ein Fahrzeugreifen gemäß den Merkmalen des Oberbegriffs von Anspruch 1 bekannt.

Der Erfindung liegt die Aufgabe zugrunde, bei derartigen Fahrzeugluftreifen sowohl unerwünschte Einrolleffekte als auch ungleichmäßigen Abrieb weiter zu reduzieren.

Die Aufgabe wird erfindungsgemäß durch die Ausbildung eines Fahrzeugluftreifens mit einem profilierten Laufstreifen mit einer Umfangsrille, welche nebeneinander angeordnete, radial erhabene Profilelemente voneinander trennt, wobei die Umfangsrille in radialer Richtung R nach innen hin durch einen Rillengrund und axial beiderseits des Rillengrundes jeweils durch eine Rillenwand begrenzt ist, wobei die durch die Umfangsrille getrennten Profilelemente in radialer Richtung R des Reifens nach außen hin durch eine radial äußere Oberfläche und in axialer Richtung A zur Umfangsrille hin jeweils durch eine Flanke begrenzt sind, die sich in radialer Richtung R ausgehend vom Rillengrund bis zur radial äußeren Oberfläche erstrecken und jeweils eine der beiden Rillenwände bilden, wobei an beiden Flanken zu der Umfangsrille hin Ansätze ausgebildet sind, die sich zum Rillengrund hin kontinuierlich verbreitern und in Umfangsrichtung U des Reifens sägezahnförmig gestuft mit alternierend angeordneten ersten Erstreckungsabschnitten der in Umfangsrichtung U gemessenen Länge L, deren größte Erstreckungsrichtungskomponente in Umfangsrichtung U ausgerichtet ist, und mit zweiten Erstreckungsabschnitten der in Umfangsrichtung U gemessenen Länge b, deren größte Erstreckungsrichtungskomponente in axialer Richtung A ausgerichtet ist, mit L > b verlaufen, gemäß den Merkmalen von Anspruch 1 gelöst, bei dem die ersten Erstreckungsabschnitte des sägezahnförmigen Verlaufes an den beiden Flanken längs der Erstreckung in Umfangsrichtung jeweils unter Einschluss eines Neigungswinkels α mit der Haupterstreckungsrichtung der Umfangsrille - insbesondere mit der Umfangsrichtung U - mit gleicher Neigungsrichtung ausgerichtet sind, und bei dem längs der Erstreckung der Flanke ausgehend vom Rillengrund in radialer Richtung nach außen der sägezahnförmige Verlauf ausgehend von einem maximalen Neigungswinkel αₘₐₓ mit kontinuierlich abnehmendem Neigungswinkel α der erste Erstreckungsabschnitte bis zu einem minimalen Neigungswinkel amin - insbesondere mit αₘᵢₙ =0° - ausgebildet ist.

Durch diese Ausbildung wird es ermöglicht, dass mithilfe der sägezahnartigen Struktur auf beiden Flankenseiten der Rille wirksame zusätzliche Griffkanten geschaffen werden, die gerade mit zunehmender Lebensdauer und größerer Abnutzung des Reifens noch wirksam sind und dabei durch die gleich gewählte Orientierungsrichtung der ersten längeren Erstreckungsabschnitte beider Flanken ein vergleichmäßigt breiter offener Kanal zum Durchfluss des Wassers auch bei schmaleren Rillen bis zum Rillengrund wirksam bleibt. Somit kann sowohl guter Schneegriff bei verbesserter Aquaplaning-Eigenschaft einfach umgesetzt werden. Im radial äußeren Erstreckungsbereich kann dabei ein großes wirksames Volumen zur Wasseraufnahme bereitgestellt werden, welches mit Abrieb gleichmäßig abnimmt.

Besonders vorteilhaft ist die Ausbildung eines Fahrzeugreifens gemäß den Merkmalen von Anspruch 2, bei dem jeweils ein erster Erstreckungsabschnitt der einen Flanke in seiner Umfangspositionierung mit wenigstens 50% seiner Erstreckungslänge L einen ersten Erstreckungsabschnitt der anderen Flanke überlappt. Hierdurch kann der offene Durchflusskanal in einfacher Weise auch im Bereich des Rillengrundes mit vergleichmäßigter Breite sicher umgesetzt und ein weitgehend störungsfreies, schnelles Ableiten des Wassers in der Umfangsrille weiter begünstigt werden.

Besonders vorteilhaft ist die Ausbildung eines Fahrzeugreifens gemäß den Merkmalen von Anspruch 3, wobei der Neigungswinkel α mit α ≤ 5° ausgebildet ist. Hierdurch kann trotz zusätzlicher wirkender Griffkanten über die die Lebensdauer in einfacher Weise der Wasserabfluss optimiert gesichert werden und dies bei Aufrechterhaltung des wirksamen Profilbildes des Reifens im Bereich der Umfangsrille.

Besonders vorteilhaft ist die Ausbildung eines Fahrzeugreifens gemäß den Merkmalen von Anspruch 4, wobei längs der Erstreckung der Flanke ausgehend vom Rillengrund in radialer Richtung nach außen der sägezahnförmige Verlauf ausgehend von einem maximalen Neigungswinkel αₘₐₓ bis zur radial äußeren Oberfläche mit kontinuierlich abnehmendem Neigungswinkel α der ersten Erstreckungsabschnitte ausgebildet ist. Hierdurch können in einfacher Wies über die gesamte Lebensdauer zunehmend wirksame Griffkanten und dabei im radial äußeren Erstreckungsbereich ein großes wirksames Volumen zur Wasseraufnahme bereitgestellt werden, welches mit Abrieb gleichmäßig abnimmt.

Besonders vorteilhaft ist die Ausbildung eines Fahrzeugreifens gemäß den Merkmalen von Anspruch 5, wobei die Erstreckungslängen L der ersten Erstreckungsabschnitte mit 5mm≤L≤10mm ausgebildet sind. Hierdurch kann in einfacher Weise die gezielte Leitung des Wassers durch die Umfangsrille bei Sicherstellung von ausreichend wirkenden Griffkanten umgesetzt werden.

Besonders vorteilhaft ist die Ausbildung eines Fahrzeugreifens gemäß den Merkmalen von Anspruch 6, wobei die Erstreckungslänge L der in Umfangsrichtung hintereinander angeordneten ersten Erstreckungsabschnitte einer Flanke unterschiedlich groß ausgebildet sind.

Besonders vorteilhaft ist die Ausbildung eines Fahrzeugreifens gemäß den Merkmalen von Anspruch 7, wobei die zweiten Erstreckungsabschnitte jeweils mit in axialer Richtung gemessener Erstreckungslänge a ausgebildet sind mit 1mm≤a≤2mm ausgebildet sind. Hierdurch kann in einfacher Weise ein weitgehend störungsfreier Durchfluss bei Bereitstellung wirksamer Griffkanten umgesetzt werden. Darüber hinaus kann beim Schließen der Rille während des Abrollens auf der Straße aufgrund von wirkenden Seitenkräften (beispielsweise beim Handling) eine sichere Verzahnung zwischen den beiden die Umfangsrille begrenzenden Flanken und somit ein wirksamer Formschluss ermöglicht werden.

Besonders vorteilhaft ist die Ausbildung eines Fahrzeugreifens gemäß den Merkmalen von Anspruch 8, wobei das eine Profilelement ein Profilblockelement einer ersten Profilblockreihe und das andere Profilelement ein Profilblockelement einer zweiten Profilblockreihe ist, wobei die in Umfangsrichtung U hintereinander angeordneten Profilblockelemente der ersten Profilblockreihe jeweils durch eine Schrägrille voneinander getrennt sind, welche in die Umfangsrille mündet und welche mit ihrer Haupterstreckungsrichtung an der Mündung über das in Umfangsrichtung angrenzende eine Profilblockelement hinweg einen stumpfen Winkel zur Umfangsrille einschließt und über das in Umfangsrichtung angrenzende andere Profilblockelement hinweg einen spitzen Winkel zur Umfangsrille einschließt, wobei die in Umfangsrichtung U hintereinander angeordneten Profilblockelemente der zweiten Profilblockreihe jeweils durch eine Querrille voneinander getrennt sind, welche sich in Verlängerung einer Schrägrille der ersten Profilblockreihe ausgehend von der Umfangsrille durch die zweite Profilblockreihe hindurch erstreckt. Hierdurch kann das Ein- und Weiterleiten des Wassers in die Querrille begünstigt werden.

Besonders vorteilhaft ist die Ausbildung eines Fahrzeugreifens, bei dem ausgehend von der Schrägrille in derjenigen Umfangsorientierungsrichtung, welche zu dem von Schrägrille und Umfangsrille mit stumpfen Winkel begrenzten Profilelblockelement hinweist, die Neigungsrichtung des Winkels α der ersten Erstreckungsabschnitte bestimmt ist, wobei die Neigungsrichtung zu dem von Schrägrille und Umfangsrille mit stumpfen Winkel begrenzten Profilelblockelement der ersten Profilblockreihe gewählt ist. Hierdurch kann in einfacher Weise ermöglicht werden, dass das aus der Schrägrille in die Umfangsrille einfließende Wasser störungsfrei optimiert in die Umfangsrille geleitet einströmt.

Die Erfindung wird im Folgenden an Hand der in den Figuren 1 bis 6 dargestellten Ausführungsbeispiele näher erläutert. Hierin zeigen
- Fig.1: eine Draufsicht auf einen Abschnitt eines Laufstreifenprofils eines Fahrzeugluftreifens,
- Fig.2: einen Ausschnitt des in Figl dargestellten Fahrzeugluftreifens in vergrößerter Darstellung in Draufsicht,
- Fig.3: ein Profilblockelementes des Laufstreifenprofils von Fig.1 und 2 in perspektivischer Darstellung zur Erläuterung der Flankenausbildung,
- Fig.4: einen Ausschnitt des Laufstreifenprofils von Fig.1 in vergrößerter Darstellung in Draufsicht,
- Fig.5a: bis 5d die Darstellung des in Fig. 2 dargestellten Abschnitts des Laufstreifenprofils von Fig. 1 in verschiedenen in Fig.3 angegebenen Schnittebenen, wobei

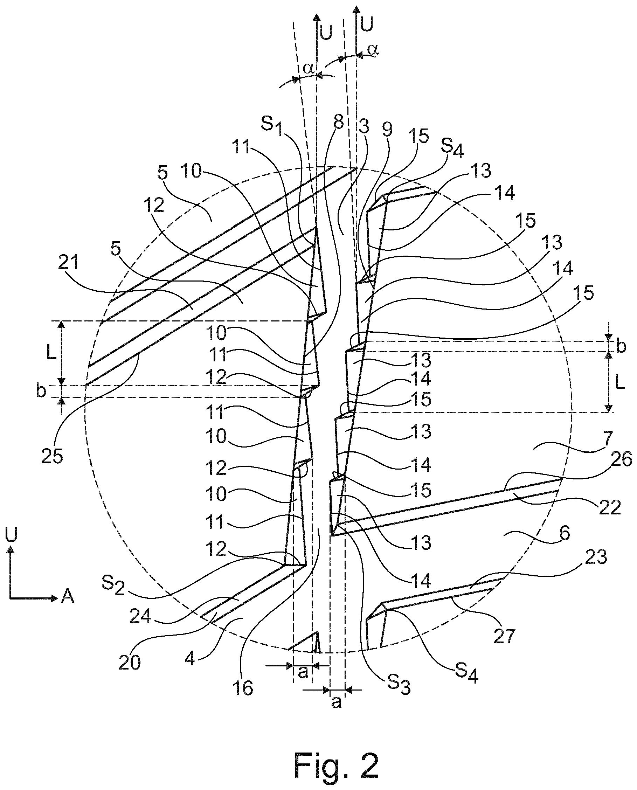

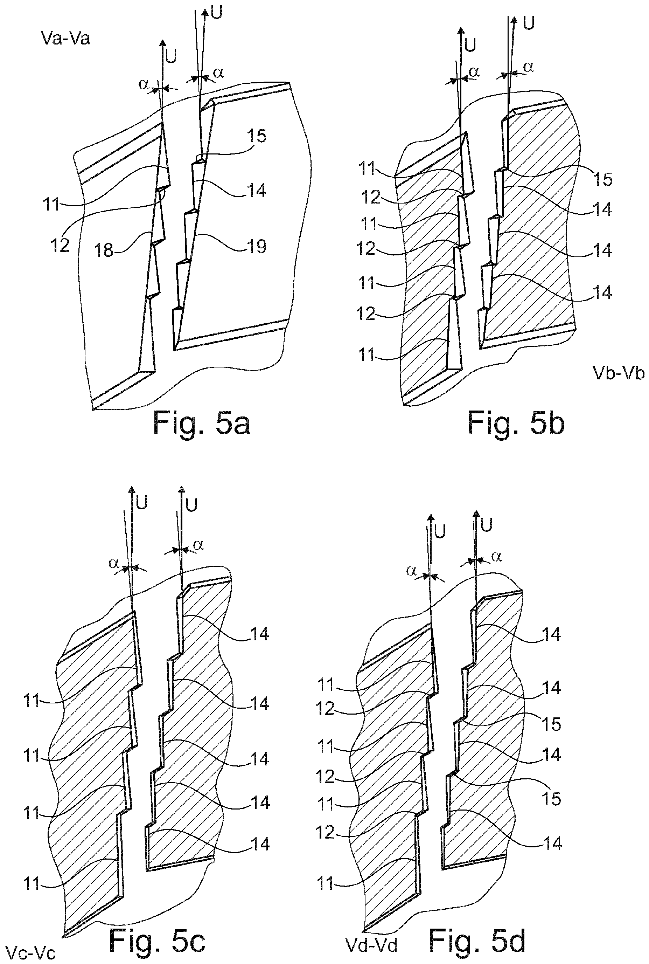

- Fig.5a: den Schnitt in der Schnittebene Va-Va darstellt, welche der Darstellung von Fig.2 entspricht,

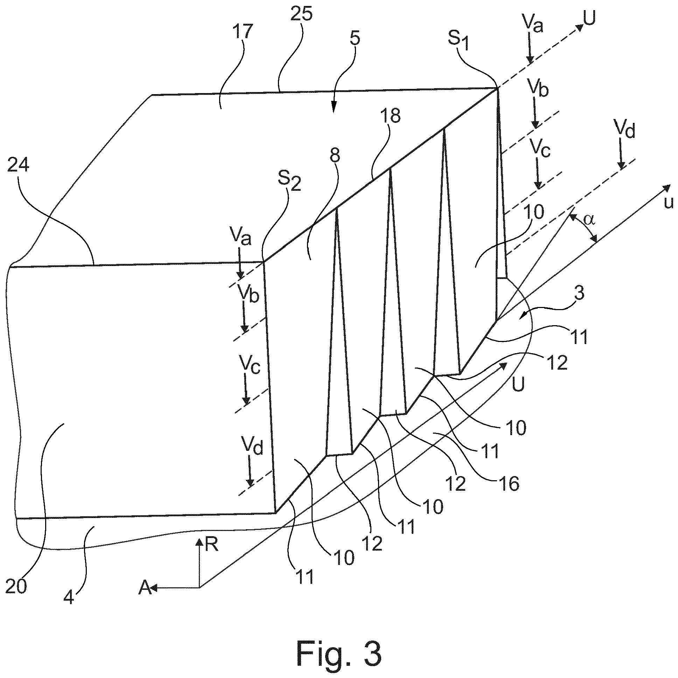

- Fig.5b: den Schnitt in der Schnittebene Vb-Vb von Fig.3 darstellt,
- Fig.5c: den Schnitt in der Schnittebene von Fig. Vc-Vc von Fig.3 darstellt und
- Fig.5d: den Schnitt in der Schnittebene des Schnitts Vd-Vd von Fig.3 darstellt.

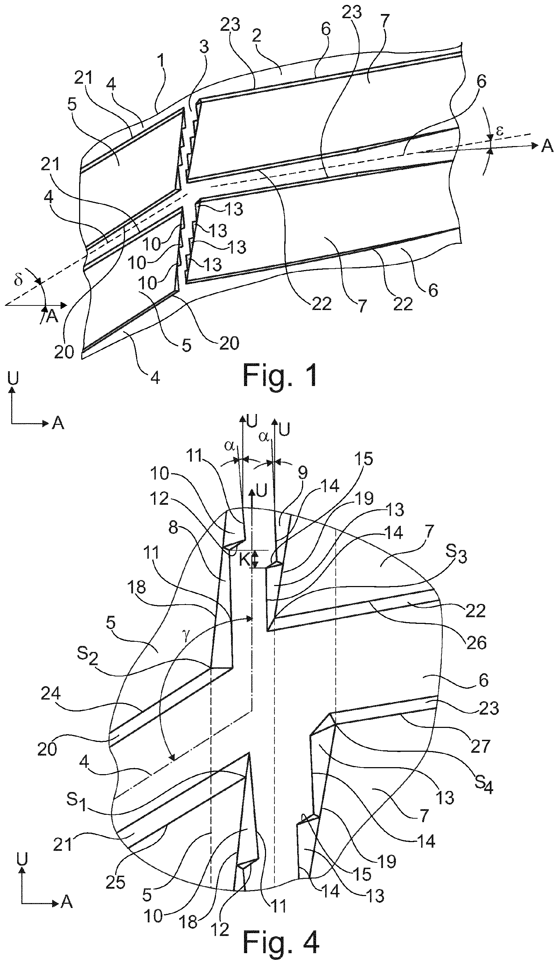

Die Figuren zeigen ein Laufstreifenprofil eines Fahrzeugluftreifens für Personenkraftwagen (Pkw) bekannter Art, bei welchem - wie in Fig.1 dargestellt ist - eine über den Umfang des Fahrzeugluftreifens erstreckte Profilblockreihe 1 und eine über den Umfang des Fahrzeugluftreifens erstreckte Profilblockreihe 2 in axialer Richtung A nebeneinander angeordnet und durch eine über den Umfang des Fahrzeugluftreifens erstreckte und im wesentlichen in Umfangsrichtung U ausgerichtete Umfangsrille 3 voneinander getrennt sind. Die Profilblockreihe 1 ist in bekannter Weise aus über den Umfang des Fahrzeugluftreifens verteilten, in Umfangsrichtung U des Fahrzeugluftreifens hintereinander angeordneten und jeweils durch Schrägrillen 4 voneinander getrennten Profilblockelementen 5 ausgebildet. Die Profilblockreihe 2 ist in bekannter Weise aus über den Umfang des Fahrzeugluftreifens verteilten, in Umfangsrichtung U hintereinander angeordneten und jeweils durch Querrillen 6 voneinander getrennten Profilblockelementen 7 ausgebildet.

Die Schrägrillen 4 erstrecken sich über die gesamte Breite der Profilblockreihe 1, sind mit ihrer Haupterstreckungsrichtung unter einem Neigungswinkel δ zur axialen Richtung A des Fahrzeugluftreifens ausgerichtet und münden in die Umfangsrille 3. Die Querrillen 6 sind durch die gesamte Profilblockreihe 2 hindurch erstreckt ausgebildet und münden ebenfalls in die Umfangsrille 3. Die Querrillen 6 sind jeweils in ihrer Haupterstreckungsrichtung unter Einschluss eines Neigungswinkels ε zur axialen Richtung A ausgerichtet, wobei δ > ε gewählt ist. Der Winkel δ ist mit 20°≤ δ ≤40° ausgebildet. Beispielsweise ist δ = 33° gewählt. Der Winkel ε ist mit 0°≤ ε ≤15° gewählt. Beispielsweise ist ε = 11° gewählt.

Die Querrille 6 bildet eine Verlängerung der Schrägrille 4 über die Umfangsrille 3 hinweg ausgebildet. Die Schrägrille 4 geht somit in ihrer Verlängerung durch die Umfangsrille 3 hindurch somit in die Querrille 6 über.

In dem in den Figuren dargestellten Ausführungsbeispiel ist die Orientierung der Neigungsrichtung der Schrägrillen 4 und der Querrillen 6 dabei so gewählt, dass längs ihrer Erstreckungsrichtung in der axialen Richtung A von der Schrägrille 4 zur Querrille 6 hin sowohl die Schrägrille 4 als auch die ihr zugeordnete Querrille 6 in der in Fig.1 nach oben hin weisend dargestellten Umfangsrichtung U ansteigen.

Die Schrägrille 4 und die Querrille 6 sind in radialer Richtung R nach innen hin jeweils durch einen Rillengrund begrenzt. Beiderseits des Rillengrundes ist die Schrägrille 4 jeweils durch eine Rillenwand begrenzt. Ebenso ist die Querrille 6 beiderseits ihres Rillengrundes jeweils durch eine Rillenwand begrenzt.

Die Umfangsrille 3 ist in radialer Richtung R nach innen hin durch einen Rillengrund 16 begrenzt. Beiderseits des Rillengrundes 16 ist die Umfangsrille 3 jeweils durch eine Rillenwand begrenzt.

Die Profilblockelemente 5 der Profilblockreihe 1 und die Profilblockelemente 7 der Profilblockreihe 2 sind in radialer Richtung R nach außen hin jeweils durch eine die Straßenkontaktoberfläche bildende radial äußere Oberfläche 17 begrenzt.

Jedes Profilblockelement 5 ist in Umfangsrichtung U des Fahrzeugluftreifens jeweils in beide Orientierungsrichtungen durch eine Flanke 20 bzw. 21 begrenzt, welche jeweils die zum Profilblockelement 5 hin gerichtete Rillenwand der das Profilblockelement 5 zu dieser Seite hin begrenzenden Schrägrille 4 bildet. Die Flanke 20 bzw. 21 und somit die Rillenwand erstreckt sich dabei ausgehend vom Rillengrund der Schrägrille 4 in radialer Richtung R nach außen hin bis zur radial äußeren Oberfläche 17 und schneiden diese jeweils in einer Schnittlinie 24 bzw. 25. Die Profilblockelemente 5 sind in axialer Richtung A zur Umfangsrille 3 hin jeweils durch eine Flanke 8 begrenzt, welche die zum Profilblockelement 5 hinweisende Rillenwand der Umfangsrille 3 bildet und sich ausgehend vom Rillengrund 16 der Umfangsrille 3 in radialer Richtung R nach außen bis zur radial äußeren Oberfläche 17 des Profilblockelementes 5 erstreckt und diese in einer Schnittkante 18 schneidet - wie beispielsweise in den Figuren 1, 2 und 3 dargestellt.

In analoger Weise ist das Profilblockelement 7 der Profilblockreihe 2 jeweils in axialer Richtung A des Fahrzeugluftreifens zur Umfangsrille 3 hin durch eine Flanke 9 begrenzt, welche die zum Profilblockelement 7 gerichtete Rillenwand der Umfangsrille 3 bildet und sich ausgehend vom Rillengrund 16 der Umfangsrille 3 in radialer Richtung R nach außen bis zur radial äußeren Oberfläche 17 des Profilblockelementes 7 erstreckt und dieses in einer Schnittkante 19 schneidet.

Jedes Profilblockelement 7 ist in Umfangsrichtung U des Fahrzeugluftreifens jeweils in beide Orientierungsrichtungen durch eine Flanke 22 bzw. 23 begrenzt, welche jeweils die zum Profilblockelement 7 hin gerichtete Rillenwand der das Profilblockelement 7 zu dieser Seite hin begrenzenden Querrille 6 bildet. Die Flanke 22 bzw. 23 und somit die Rillenwand erstreckt sich dabei ausgehend vom Rillengrund der Schrägrille 6 in radialer Richtung R nach außen hin bis zur radial äußeren Oberfläche 17 und schneiden diese jeweils in einer Schnittlinie 26 bzw. 27.

Die Umfangsrille 3 und die Schrägrille 4 schließen dabei jeweils mit ihrer Erstreckungsrichtung längs ihrer Erstreckung bis zur Einmündung der Schrägrille 4 in die Umfangsrille 3 einen stumpfen Winkel γ ein, welcher das eine der beiden von der Schrägrille 4 und der Umgangsrille 3 begrenzte Profilblockelement 5 überstreicht. Die von diesem Profilblockelement 5 hin die Schrägrille 4 begrenzende Flanke 20 des Profilblockelementes 5 schneidet die radial äußere Oberfläche in einer Schnittlinie 24, welche die Schnittlinie 18 in einem Schnittpunkt S₂ schneidet.

Die Erstreckungsrichtung der Schrägrille 4 und die Erstreckungsrichtung der Umfangsrille 3 schließen einen über das andere die Schrägrille 4 begrenzende Profilblockelement 5 streichenden spitzen Winkel (180° - y) ein. Die dieses Profilblockelement 5 hin zur Schrägrille 4 begrenzende Flanke 21 schneidet die radial äußere Oberfläche 17 dieses Profilblockelementes 5 in einer Schnittkante 25, welche die Schnittkante 18 dieses Profilblockelementes 5 in einem Schnittpunkt S₁ schneidet.

In Umfangsrichtung U gesehen zu derjenigen Seite der Schrägrille 4 hin, in welcher diese einen stumpfen Winkel γ mit der Erstreckungsrichtung der Umfangsrille 3 über ein angrenzendes Profilblockelement 5 einschließt - d.h. in der Darstellung von Figur 1 nach oben hin -, ist auch die die anschließende Querrille 6 begrenzende Flanke 22 des zu dieser Seite hin angrenzenden Profilblockelementes 7 mit ihrer Schnittkante 26 ausgebildet, welche die Schnittkante 19 dieses Profilblockelementes 7 in einem Schnittpunkt S₃ schneidet.

Die die Querrille 6 in entgegengesetzter Umfangsrichtung U hin begrenzende Flanke 23 des anderen die Querrille 6 begrenzenden Profilblockelementes 7, schneidet die radial äußere Oberfläche dieses Profilblockelemente 7 in einer Schnittkante 27, welche die Schnittkante 19 dieses Profilblockelements 7 in einem Schnittpunkt S₄ schneidet.

Somit sind im Bereich der Kreuzung aus Umfangsrille 3 einerseits und Schrägrille 4 mit deren Verlängerung als Querrille 6 - wie in Fig. 4 gezeigt - in der radial äußeren Oberfläche die vier Schnittpunkte S₁, S₂ S₃, S₄ angeordnet, wobei in axialer Richtung A des Reifens gesehen der Schnittpunkt S₁ zwischen den Schnittpunkten S₂ und S₃ und der Schnittpunkt S₃ zwischen den Schnittpunkten S₁ und S₄ angeordnet ausgebildet ist. In Umfangsrichtung U des Fahrzeugluftreifens gesehen ist der Schnittpunkt S₄ zwischen den Schnittpunkten S₁ und S₂ und der Schnittpunkt S₂ zwischen den Schnittpunkten S₄ und S₃ angeordnet.

Somit ist auch jedes Profilblockelement 5 an seiner Schnittstelle zwischen Umfangsrille 3 und der einen begrenzenden Schrägrille 4 mit einem Schnittpunkt S₂ und an seiner Schnittstelle mit der anderen Schrägrille 4 mit einem Schnittpunkt S₁ ausgebildet. Ebenso ist jedes Profilblockelement 7 in korrespondierender Weise mit einem Schnittpunkt S₃ und einem Schnittpunkt S₄ ausgebildet. Dies ist beispielsweise auch in Fig.2 dargestellt.

Die das Profilblockelement 5 zur Umfangsrille 3 hin begrenzende Flanke 8 ist in Umfangsrichtung U des Fahrzeugluftreifens gesehen mit mehreren hintereinander angeordneten in die Umfangsrille 2 erstreckten Ansätzen 10 ausgebildet, welche in die Rille vorspringen und sich dabei ausgehend von der Schnittkante 18 in radialer Richtung R von außen nach innen bis zum Rillengrund 16 V-förmig erweitern.Die Ansätze 10 sind in ihrer Erstreckung in Umfangsrichtung U mit einem zick-zack-förmigen Verlauf aus ersten Erstreckungsabschnitten 11 und zweiten Erstreckungsabschnitten 12 ausgebildet, wobei jeder vorspringende Ansatz 10 jeweils einen ersten Erstreckungsabschnitt 11 und einen zweiten Erstreckungsabschnitt 12 aufweist. Der erste Erstreckungsabschnitt 11 ist jeweils mit einer in Umfangsrichtung U ausgemessenen Erstreckungslänge L und der zweite Erstreckungsabschnitt 12 mit einer in Umfangsrichtung U gemessenen Erstreckungslänge b, wobei L deutlich größer ist als b. Die kurzen zweiten Erstreckungsabschnittes 12 sind mit einer in axialer Richtung A des Fahrzeugluftreifens gemessenen Erstreckungslänge a ausgebildet. Die Ansätze 10 sind dabei so hintereinander angeordnet, dass die ersten Erstreckungsabschnitte 11 und die zweiten Erstreckungsabschnitte 12 der Flanke 8 in alternierender Abfolge hintereinander positioniert sind und somit den zick-zack-förmigen Verlauf bilden.

Die ersten Erstreckungsabschnitte 11 sind dabei längs ihrer Erstreckung in Erstreckungsrichtung ausgehend von dem im stumpfen Winkel eingeschlossenen Schnittpunkt S₂ in Richtung zu dem im spitzen Winkel eingeschlossenen Schnittpunkt S₁ des Profilblockelementes 5 jeweils unter Einschluss eines Neigungswinkels α mit der Umfangsrichtung U in axialer Richtung A des Fahrzeugluftreifens zu der von der Umfangsrille 3 wegweisenden Seite hin geneigt. Die kurzen zweiten Erstreckungsabschnittes 12 sind längs ihrer Erstreckung in Erstreckungsrichtung ausgehend von dem im stumpfen Winkel eingeschlossenen Schnittpunkt S₂ in Richtung zu dem im spitzen Winkel eingeschlossenen Schnittpunkt S₁ des Profilblockelementes 5 jeweils unter Einschluss eines Neigungswinkels α mit der Umfangsrichtung U in axialer Richtung A des Fahrzeugluftreifens zu der zur der Umfangsrille 3 hinweisenden Seite hin geneigt.

In analoger Weise ist die Flanke 9 des gegenüber vom Profilblockelement 5 die Umfangsrille 3 begrenzenden Profilblockelementes 7 längs der Umfangserstreckung ausgehend vom Schnittpunkt S₃ bis zum Schnittpunkt S₄ des Profilblockelementes 7 hintereinander angeordneten Ansätzen 13 ausgebildet, welche in die Rille vorspringen und sich dabei ausgehend von der Schnittkante 19 in radialer Richtung R von außen nach innen bis zum Rillengrund 16 V-förmig erweitern. Die Ansätze 13 sind in ihrer Erstreckung in Umfangsrichtung U mit einem zick-zack-förmigen Verlauf aus ersten Erstreckungsabschnitten 14 und zweiten Erstreckungsabschnitten 15 ausgebildet, wobei jeder vorspringende Ansatz 13 jeweils einen ersten Erstreckungsabschnitt 14 und einen zweiten Erstreckungsabschnitt 15 aufweist. Der erste Erstreckungsabschnitt 14 ist jeweils mit einer in Umfangsrichtung U ausgemessenen Erstreckungslänge L und der zweite Erstreckungsabschnitt 15 mit einer in Umfangsrichtung U gemessenen Erstreckungslänge b, wobei L deutlich größer ist als b. Die kurzen zweiten Erstreckungsabschnittes 15 sind mit einer in axialer Richtung A des Fahrzeugluftreifens gemessenen Erstreckungslänge a ausgebildet. Die Ansätze 13 sind dabei so hintereinander angeordnet, dass die ersten Erstreckungsabschnitte 14 und die zweiten Erstreckungsabschnitte 15 der Flanke 9 in alternierender Abfolge hintereinander positioniert sind und somit den zick-zack-förmigen Verlauf bilden.

Die ersten Erstreckungsabschnitte 14 sind dabei längs ihrer Erstreckung in Erstreckungsrichtung ausgehend von dem Schnittpunkt S₃ in Richtung zu dem Schnittpunkt S₄ des Profilblockelementes 7 jeweils unter Einschluss eines Neigungswinkels α mit der Umfangsrichtung U in axialer Richtung A des Fahrzeugluftreifens zu der zur Umfangsrille 3 und somit zum benachbarten Profilblockelement 5 hinweisenden Seite hin geneigt. Die kurzen zweiten Erstreckungsabschnittes 15 sind längs ihrer Erstreckung in Erstreckungsrichtung ausgehend von dem Schnittpunkt S₃ in Richtung zu dem Schnittpunkt S₄ des Profilblockelementes 7 jeweils unter Einschluss eines Neigungswinkels α mit der Umfangsrichtung U in axialer Richtung A des Fahrzeugluftreifens zu der von der Umfangsrille 3 und somit vom benachbarten Profilblockelement 5 wegweisenden Seite hin geneigt.

Die längeren ersten Erstreckungsabschnitte 14 sind längs ihrer Erstreckung in Umfangsrichtung ausgehend vom Schnittpunkt S₃ in Richtung zum Schnittpunkt S₄ des Profilblockelementes 7 mit gleicher Neigungsorientierung wie die ersten Erstreckungsabschnitte 11 des benachbarten Profilblockelementes 5 ausgebildet.

Ebenso sind die kürzeren zweiten Erstreckungsabschnitte 15 sind längs ihrer Erstreckung in Umfangsrichtung ausgehend vom Schnittpunkt S₃ in Richtung zum Schnittpunkt S₄ des Profilblockelementes 7 mit gleicher Neigungsorientierung wie die zweiten Erstreckungsabschnitte 12 des benachbarten Profilblockelementes 5 ausgebildet.

Die einzelnen hintereinander angeordneten ersten Erstreckungsabschnitte 11 der Flanke 8 des Profilblockelementes 5 und die einzelnen hintereinander angeordneten ersten Erstreckungsabschnitte 14 der Flanke 9 des benachbarten Profilblockelementes 7 sind dabei jeweils so positioniert, dass jeder erste Erstreckungsabschnitt 14 sich längs seiner Erstreckung in Umfangsrichtung mit einem ersten Erstreckungsabschnitt 11 mit einer Überlappungslänge von mindestens 50 % der Erstreckungslänge L des Erstreckungsabschnitts 14 überlappt und in seiner Erstreckung in Erstreckungsrichtung ausgehend vom Schnittpunkt S₂ in Richtung zum Schnittpunkt S₁ des Profilblockelementes 5 gesehen mit einem in Umfangsrichtung U des Fahrzeugluftreifens gemessenen Abstand k hinter dem Erstreckungsende des Erstreckungsabschnittes 14 endet. Dies ist beispielsweise in Fig. 4 dargestellt. Der Abstand k ist dabei mit k ≥ a gewählt.

Auf diese Weise ist jeweils zwischen jedem kurzen zweiten Erstreckungsabschnitt 15 und dem zu diesem korrespondierend ausgebildeten, nächstgelegenen kurzen zweiten Erstreckungsabschnitt 12 ein in der Umfangsrichtung U gemessener Mindestabstand k ausgebildet.

Die Erstreckungslängen L sind jeweils mit 5 mm ≤ L ≤ 10 mm gewählt ausgebildet. Die Erstreckungslängen a sind jeweils mit 1 mm ≤ a ≤ 2 mm gewählt ausgebildet. Der Winkel α ist jeweils mit α ≤ 5° gewählt ausgebildet.

Wie in den Figuren 3, 5a, 5b, 5c und 5d zu erkennen ist, ist der Neigungswinkel α im Rillengrund 16 mit seinem Maximalwert amax beispielsweise mit amax = 5° ausgebildet. Längs der Erstreckung der Flanke 8 von radial innen nach radial außen bis zur radial äußeren Oberfläche 17 nimmt der Neigungswinkel α kontinuierlich ab und erreicht sein Minimum in der Schnittlinie 18. In analoger Weise nimmt der Neigungswinkel α der Flanken 9 ausgehend von seinem Maximalwert αₘₐₓ im Rillengrund 16 der Umfangsrille 3 längs der Erstreckung der Flanke 9 in radialer Richtung nach radial außen bis zur radial äußeren Oberfläche 17 kontinuierlich ab und erreicht sein Minimum in der Schnittlinie 19.

Fig.5a zeigt die Darstellung entsprechend der Darstellung von Fig.2. In Fig.5d ist zu erkennen, dass der in dieser radialen Position gebildete Schnittkantenverlauf der zick-zack-förmigen Konturen erste Erstreckungsabschitte 11 bzw. 14 und zweite Erstreckungsabschnitte 12 und 15 bilden, wobei der Neigungswinkel α der ersten Erstreckungsabschnitte 11 bzw. 14 in dieser radialen Position kleiner ist als der Neigungswinkel α im Rillengrund 16. Fig. 5c zeigt die Schnittposition in einer Position noch radial oberhalb der in Fig.5d gezeigten Schnittposition. Der durch die zick-zack-förmigen Schnittkonturen gebildete Neigungswinkel α der ersten Erstreckungsabschitte 11 und 14 in dieser Schnittposition ist kleiner als in der radialen Position, die in Fig.5d dargestellt ist. In der noch weiter oben ausgebildeten Schnittposition der Fig.5b ist der verbleibende Neigungswinkel α noch kleiner als der Neigungswinkel α der in Fig.5c dargestellten Schnittebene. In der am weitesten radial außen ausgebildeten, ebenfalls in Fig.5a dargestellten Position, in der die Schnittkontur den Schnittkanten 18 und 19 entspricht, ist der Neigungswinkel α am kleinsten.

In Fig. 2 ist erkennbar, dass Wasser, welches aus der Schrägrille 4 in die Umfangsrille 3 um den Schnittpunkt S₂ herum einmündet, in stumpfem Winkel in den breiten zwischen den benachbarten Zickzack-förmigen Linien gebildeten Kanal einmündet und längs der ersten Erstreckungsabschnitte 11 und 14 geleitet wird. Die Positionierung der Punkte S₁ und S₃ begünstigt das Einleiten des Wassers aus der Schrägrille in die Umfangsrille und gleichzeitig das Ausleiten aus dem vorangegangenen Umfangsabschnitt der Umfangsrille 3 ausfließende Wasser in den Abschnitt der Querrille 6.

In einer Ausführungsform sind die Schnittkanten 18 und 19 parallel zueinander ausgerichtet. Ebenso sind die ersten Erstreckungsabschnitte 11 und 12 zwischen den benachbarten Profilblockelementen 5 und 7 jeweils parallel zu einander ausgerichtet.

In einer anderen in Fig. 2 dargestellten Ausführung sind die Schnittlinien 18 und 19 ausgehend von den Schnittpunkten S₂ bzw. S₃ längs ihrer Erstreckung in Umfangsrichtung zu den Schnittpunkten S₁ bzw. S₄ geringfügig divergierend ausgebildet und in Analogie auch die ersten Erstreckungsabschnitte 11 und 14.

Der stumpfe Winkel γ ist in den oben beschriebenen und in den Figruren dargestellten Ausführungsbeispielen mit 120°≤γ≤140° gewählt ausgebildet. Beispielsweise ist der Winkel γ mit y=128° ausgebildet.

### Bezugszeichenliste

- 1: Profilblockreihe
- 2: Profilblockreihe
- 3: Umfangsrille
- 4: Schrägrille
- 5: Profilblockelement
- 6: Querrille
- 7: Profilblockelement
- 8: Flanke
- 9: Flanke
- 10: Ansatz
- 11: Erster Erstreckungsabschnitt
- 12: Zweiter Erstreckungsabschnitt
- 13: Ansatz
- 14: Erster Erstreckungsabschnitt
- 15: Zweiter Erstreckungsabschnitt
- 16: Rillengrund
- 17: Radial äußere Oberfläche
- 18: Schnittlinie
- 19: Schnittlinie
- 20: Flanke
- 21: Flanke
- 22: Flanke
- 23: Flanke
- 24: Schnittlinie
- 25: Schnittlinie
- 26: Schnittlinie
- 27: Schnittlinie

## Patentansprüche

1. Fahrzeugluftreifen mit einem profilierten Laufstreifen mit einer Umfangsrille (3), welche nebeneinander angeordnete, radial erhabene Profilelemente (5,7) voneinander trennt, wobei die Umfangsrille (3) in radialer Richtung R nach innen hin durch einen Rillengrund (16) und axial beiderseits des Rillengrundes (16) jeweils durch eine Rillenwand begrenzt ist, wobei die durch die Umfangsrille (3) getrennten Profilelemente (5,7) in radialer Richtung R des Reifens nach außen hin durch eine radial äußere Oberfläche (17) und in axialer Richtung A zur Umfangsrille (3) hin jeweils durch eine Flanke (8,9) begrenzt sind, die sich in radialer Richtung R ausgehend vom Rillengrund (16) bis zur radial äußeren Oberfläche (17) erstrecken und jeweils eine der beiden Rillenwände bilden, wobei an beiden Flanken (8,9) zu der Umfangsrille (3) hin Ansätze (10,13) ausgebildet sind, die in Umfangsrichtung U des Reifens sägezahnförmig gestuft mit alternierend angeordneten ersten Erstreckungsabschnitten (11,14) der in Umfangsrichtung U gemessenen Länge L, deren größte Erstreckungsrichtungskomponente in Umfangsrichtung U ausgerichtet ist, und mit zweiten Erstreckungsabschnitten (12,15) der in Umfangsrichtung U gemessenen Länge b, deren größte Erstreckungsrichtungskomponente in axialer Richtung A ausgerichtet ist, mit L > b verlaufen,
wobei die ersten Erstreckungsabschnitte (11) des sägezahnförmigen Verlaufes an der einen Flanke (8) längs der Erstreckung in Umfangsrichtung U jeweils unter Einschluss eines Neigungswinkels α mit der Haupterstreckungsrichtung der Umfangsrille - insbesondere mit der Umfangsrichtung U - und die ersten Erstreckungsabschnitte (14) des sägezahnförmigen Verlaufes an der anderen Flanke (9) längs der Erstreckung in Umfangsrichtung U jeweils unter Einschluss eines Neigungswinkels α mit der Haupterstreckungsrichtung der Umfangsrille - insbesondere mit der Umfangsrichtung U - ausgerichtet sind, wobei die ersten Erstreckungsabschnitte (11,14) des sägezahnförmigen Verlaufes an den beiden Flanken (8,9) längs der Erstreckung in Umfangsrichtung U mit gleicher Neigungsrichtung ausgerichtet sind, **dadurch gekennzeichnet,**
**dass** die Ansätze (10,13) sich zum Rillengrund (16) hin kontinuierlich verbreitern, und
**dass** längs der Erstreckung der Flanke (8,9) ausgehend vom Rillengrund (16) in radialer Richtung R nach außen der sägezahnförmige Verlauf ausgehend von einem maximalen Neigungswinkel amax mit kontinuierlich abnehmendem Neigungswinkel α der ersten Erstreckungsabschnitte (11,14) bis zu einem minimalen Neigungswinkel amin - insbesondere mit amin =0° - ausgebildet ist.

2. Fahrzeugluftreifen gemäß den Merkmalen von Anspruch 1,
wobei jeweils ein erster Erstreckungsabschnitt (14) der einen Flanke (9) in seiner Umfangspositionierung mit wenigstens 50% seiner Erstreckungslänge L einen ersten Erstreckungsabschnitt (11) der anderen Flanke (8) überlappt.

3. Fahrzeugluftreifen gemäß den Merkmalen von Anspruch 1 oder 2,
wobei der Neigungswinkel α mit α ≤ 5° ausgebildet ist.

4. Fahrzeugluftreifen gemäß den Merkmalen von Anspruch 1,
wobei längs der Erstreckung der Flanke (8,9) ausgehend vom Rillengrund (16) in radialer Richtung R nach außen der sägezahnförmige Verlauf ausgehend von einem maximalen Neigungswinkel αₘₐₓ bis zur radial äußeren Oberfläche (17) mit kontinuierlich abnehmendem Neigungswinkel α der ersten Erstreckungsabschnitte (11,14) ausgebildet ist.

5. Fahrzeugluftreifen gemäß den Merkmalen von einem oder mehreren der vorangegangenen Ansprüche,
wobei die Erstreckungslängen L der ersten Erstreckungsabschnitte (11,14) mit 5mm≤L≤10mm ausgebildet sind.

6. Fahrzeugluftreifen gemäß den Merkmalen von einem oder mehreren der vorangegangenen Ansprüche,
wobei die Erstreckungslänge L der in Umfangsrichtung hintereinander angeordneten ersten Erstreckungsabschnitte (11,12) einer Flanke (8,9) unterschiedlich groß ausgebildet sind.

7. Fahrzeugluftreifen gemäß den Merkmalen von einem oder mehreren der vorangegangenen Ansprüche,
wobei die zweiten Erstreckungsabschnitte (12,15) jeweils mit in axialer Richtung gemessener Erstreckungslänge a mit 1mm≤a≤2mm ausgebildet sind.

8. Fahrzeugluftreifen gemäß den Merkmalen von einem oder mehreren der vorangegangenen Ansprüche,
wobei das eine Profilelement ein Profilblockelement (5) einer ersten Profilblockreihe (1) und das andere Profilelement ein Profilblockelement (7) einer zweiten Profilblockreihe (2) ist,
wobei die in Umfangsrichtung U hintereinander angeordneten Profilblockelemente (5) der ersten Profilblockreihe (1) jeweils durch eine Schrägrille (4) voneinander getrennt sind, welche in die Umfangsrille (3) mündet und welche mit ihrer Haupterstreckungsrichtung an der Mündung über das in Umfangsrichtung angrenzende eine Profilblockelement (5) hinweg einen stumpfen Winkel γ zur Umfangsrille (3) einschließt und über das in Umfangsrichtung U angrenzende andere Profilblockelement (5) hinweg einen spitzen Winkel zur Umfangsrille (3) einschließt,
wobei die in Umfangsrichtung U hintereinander angeordneten Profilblockelemente (7) der zweiten Profilblockreihe (2) jeweils durch eine Querrille (6) voneinander getrennt sind, welche sich in Verlängerung einer Schrägrille (4) der ersten Profilblockreihe (1) ausgehend von der Umfangsrille (3) durch die zweite Profilblockreihe (2) hindurch erstreckt.

9. Fahrzeugluftreifen gemäß den Merkmalen von Anspruch 8,
bei dem von der Schrägrille (4) ausgehend in derjenigen Umfangsorientierung, welche zu dem einen Profilblockelement (5) hin weist, die Neigungsrichtung des Winkels α der ersten Erstreckungsabschnitte (11,14) bestimmt ist, wobei die Neigungsrichtung zu dem einen Profilblockelement (5) der ersten Profilblockreihe (1) gewählt ist.

## Claims

1. Pneumatic vehicle tire having a profiled tread with a circumferential channel (3) which separates mutually adjacently arranged, radially elevated profile elements (5, 7) from one another, wherein the circumferential channel (3) is delimited inward in a radial direction R by a channel base (16) and axially to both sides of the channel base (16) in each case by a channel wall, wherein the profile elements (5, 7) separated by the circumferential channel (3) are delimited outward in the radial direction R of the tire by a radially outer surface (17) and toward the circumferential channel (3) in an axial direction A in each case by a flank (8, 9), which flanks extend in the radial direction R proceeding from the channel base (16) to the radially outer surface (17) and form in each case one of the two channel walls, wherein projections (10, 13) toward the circumferential channel (3) are formed on both flanks (8, 9), which projections, in a circumferential direction U of the tire, run in sawtooth-shaped stepped fashion with alternately arranged first extent sections (11, 14), which have a length L measured in the circumferential direction U and the greatest extent direction component of which is oriented in the circumferential direction U, and with second extent sections (12, 15), which have a length b measured in the circumferential direction U and the greatest extent direction component of which is oriented in an axial direction A, where L > b,
wherein
the first extent sections (11) of the sawtooth-shaped profile on the one flank (8) are oriented along the extent in the circumferential direction U in each case so as to enclose an inclination angle α with the main extent direction of the circumferential channel - in particular with the circumferential direction U - and the first extent sections (14) of the sawtooth-shaped profile on the other flank (9) are oriented along the extent in the circumferential direction U in each case so as to enclose an inclination angle α with the main extent direction of the circumferential channel - in particular with the circumferential direction U, wherein the first extent sections (11, 14) of the sawtooth-shaped profile on the two flanks (8, 9) are oriented with the same inclination direction along the extent in the circumferential direction U,
**characterized**
**in that** the projections (10, 13) widen in continuous fashion toward the channel base (16), and
**in that** outward along the extent of the flank (8, 9) in the radial direction R proceeding from the channel base (16), the sawtooth-shaped profile is, proceeding from a maximum inclination angle αₘₐₓ, formed with a continuously decreasing inclination angle α of the first extent sections (11, 14) as far as a minimum inclination angle αₘᵢₙ, in particular where αₘᵢₙ = 0°.

2. Pneumatic vehicle tire as per the features of Claim 1,
wherein in each case one first extent section (14) of one flank (9), in terms of its circumferential positioning, overlaps, with at least 50% of its extent length L, a first extent section (11) of the other flank (8).

3. Pneumatic vehicle tire as per the features of Claim 1 or 2,
wherein the inclination angle α is configured such that α ≤ 5°.

4. Pneumatic vehicle tire as per the features of Claim 1,
wherein, outward along the extent of the flank (8, 9) in the radial direction R proceeding from the channel base (16), the sawtooth-shaped profile is, proceeding from a maximum inclination angle αₘₐₓ, formed as far as the radially outer surface (17) with a continuously decreasing inclination angle α of the first extent sections (11, 14).

5. Pneumatic vehicle tire as per the features of one or more of the preceding claims,
wherein the extent lengths L of the first extent sections (11, 14) are configured such that 5 mm ≤ L ≤ 10 mm.

6. Pneumatic vehicle tire as per the features of one or more of the preceding claims,
wherein the extent lengths L of the first extent sections (11, 12), arranged in series in the circumferential direction, of a flank (8, 9) are of different magnitudes.

7. Pneumatic vehicle tire as per the features of one or more of the preceding claims,
wherein the second extent sections (12, 15) are formed in each case with an extent length a measured in the axial direction, where 1 mm ≤ a ≤ 2 mm.

8. Pneumatic vehicle tire as per the features of one or more of the preceding claims,
wherein one profile element is a profile block element (5) of a first profile block row (1) and the other profile element is a profile block element (7) of a second profile block row (2),
wherein the profile block elements (5), arranged in series in the circumferential direction U, of the first profile block row (1) are separated from one another in each case by an oblique channel (4) which opens into the circumferential channel (3) and which with its main extent direction, at the opening-in point, encloses an obtuse angle γ with the circumferential channel (3) across one profile block element (5) situated adjacent in the circumferential direction and encloses an acute angle with the circumferential channel (3) across the other profile block element (5) situated adjacent in the circumferential direction U,
wherein the profile block elements (7), arranged in series in the circumferential direction U, of the second profile block row (2) are separated from one another in each case by a transverse channel (6) which extends, as an elongation of an oblique channel (4) of the first profile block row (1), proceeding from the circumferential channel (3) through the second profile block row (2).

9. Pneumatic vehicle tire as per the features of Claim 8,
in which the inclination direction of the angle α of the first extent sections (11, 14) is defined proceeding from the oblique channel (4) in that circumferential orientation which points toward the one profile block element (5), wherein the inclination direction toward the one profile block element (5) of the first profile block row (1) is selected.

## Revendications

1. Pneumatique de véhicule comprenant une bande de roulement profilée dotée d'une rainure périphérique (3), laquelle sépare les uns des autres des éléments profilés (5, 7) rehaussés radialement et disposés les uns à côté des autres, la rainure périphérique (3) étant délimitée dans la direction radiale R vers l'intérieur par un fond de rainure (16) et respectivement par une paroi de rainure axialement de part et d'autre du fond de rainure (16), les éléments profilés (5, 7) séparés par la rainure périphérique (3) étant délimités dans la direction radiale R du pneumatique vers l'extérieur par une surface (17) radialement extérieure et dans la direction axiale A vers la rainure périphérique (3) respectivement par un flanc (8, 9), lesquels flancs s'étendent dans la direction radiale R à partir du fond de rainure (16) jusqu'à la surface (17) radialement extérieure et forment respectivement l'une des deux parois de rainure, des saillies (10, 13) étant formées au niveau des deux flancs (8, 9) en direction de la rainure périphérique (3), lesquelles s'étendent de manière étagée en dents de scie dans la direction périphérique U du pneumatique avec des premières parties d'étendue (11, 14), disposées en alternance, de longueur L mesurée dans la direction périphérique U, dont la plus grande composante directionnelle d'étendue est orientée dans la direction périphérique U, et avec des deuxièmes parties d'étendue (12, 15) de longueur b mesurée dans la direction périphérique U, dont la plus grande composante directionnelle d'étendue est orientée dans la direction axiale A, avec L > b,
les premières parties d'étendue (11) du profil en dents de scie au niveau de l'un des flancs (8) étant orientées le long de l'étendue dans la direction périphérique U respectivement en formant un angle d'inclinaison α avec la direction d'étendue principale de la rainure périphérique, en particulier avec la direction périphérique U, et les premières parties d'étendue (14) du profil en dents de scie au niveau de l'autre flanc (9) étant orientées le long de l'étendue dans la direction périphérique U respectivement en formant un angle d'inclinaison α avec la direction d'étendue principale de la rainure périphérique, en particulier avec la direction périphérique U,
les premières parties d'étendue (11, 14) du profil en dents de scie au niveau des deux flancs (8, 9) étant orientées le long de l'étendue dans la direction périphérique U suivant la même direction d'inclinaison, **caractérisé en ce que**
les saillies (10, 13) s'élargissent de manière continue en direction du fond de rainure (16), et
**en ce que** le long de l'étendue des flancs (8, 9), à partir du fond de rainure (16) dans la direction radiale R vers l'extérieur, le profil en dents de scie est formé, à partir d'un angle d'inclinaison maximal αₘₐₓ, de manière à présenter un angle d'inclinaison α décroissant de manière continue des premières parties d'étendue (11, 14) jusqu'à un angle d'inclinaison minimal αmin, en particulier avec αmin = 0°.

2. Pneumatique de véhicule selon les caractéristiques de la revendication 1,
dans lequel respectivement une première partie d'étendue (14) de l'un des flancs (9) chevauche, en termes de positionnement périphérique, par au moins 50% de sa longueur d'étendue L, une première partie d'étendue (11) de l'autre flanc (8).

3. Pneumatique de véhicule selon les caractéristiques de la revendication 1 ou 2,
dans lequel l'angle d'inclinaison α est formé de telle sorte que α ≤ 5°.

4. Pneumatique de véhicule selon les caractéristiques de la revendication 1,
dans lequel le long de l'étendue des flancs (8, 9), à partir du fond de rainure (16) dans la direction radiale R vers l'extérieur, le profil en dents de scie est formé, à partir d'un angle d'inclinaison maximal αₘₐₓ jusqu'à la surface (17) radialement extérieure, de manière à présenter un angle d'inclinaison α décroissant de manière continue des premières parties d'étendue (11, 14).

5. Pneumatique de véhicule selon les caractéristiques d'une ou plusieurs des revendications précédentes,
dans lequel les longueurs d'étendue L des premières parties d'étendue (11, 14) sont formées de telle sorte que 5 mm ≤ L ≤ 10 mm.

6. Pneumatique de véhicule selon les caractéristiques d'une ou plusieurs des revendications précédentes,
dans lequel la longueur d'étendue L des premières parties d'étendue (11, 12), disposées les unes derrière les autres dans la direction périphérique, d'un flanc (8, 9) sont de dimensions différentes.

7. Pneumatique de véhicule selon les caractéristiques d'une ou plusieurs des revendications précédentes,
dans lequel les deuxièmes parties d'étendue (12, 15) sont formées respectivement de manière à présenter une longueur d'étendue a mesurée dans la direction axiale, avec 1 mm ≤ a ≤ 2 mm.

8. Pneumatique de véhicule selon les caractéristiques d'une ou plusieurs des revendications précédentes,
dans lequel l'un des éléments profilés est un élément de bloc profilé (5) d'une première rangée de blocs profilés (1) et l'autre élément profilé est un élément de bloc profilé (7) d'une deuxième rangée de blocs profilés (2), les éléments de bloc profilé (5), disposés les uns derrière les autres dans la direction périphérique U, de la première rangée de blocs profilés (1) étant séparés les uns des autres respectivement par une rainure oblique (4), laquelle débouche dans la rainure périphérique (3) et laquelle, par sa direction d'étendue principale, au niveau du débouché, forme un angle obtus γ par rapport à la rainure périphérique (3) sur l'un des éléments de bloc profilé (5) adjacents dans la direction périphérique et forme un angle aigu par rapport à la rainure périphérique (3) sur l'autre élément de bloc profilé (5) adjacent dans la direction périphérique U,
dans lequel les éléments de bloc profilé (7), disposés les uns derrière les autres dans la direction périphérique U, de la deuxième rangée de blocs profilés (2) sont séparés les uns des autres respectivement par une rainure transversale (6), laquelle s'étend dans le prolongement d'une rainure oblique (4) de la première rangée de blocs profilés (1) à partir de la rainure périphérique (3) à travers la deuxième rangée de blocs profilés (2).

9. Pneumatique de véhicule selon les caractéristiques de la revendication 8,
dans lequel la direction d'inclinaison de l'angle α des premières parties d'étendue (11, 14) est définie à partir de la rainure oblique (4) dans l'orientation périphérique qui est tournée vers l'un des éléments de blocs profilés (5), la direction d'inclinaison vers l'un des éléments de bloc profilé (5) de la première rangée de blocs profilés (1) étant sélectionnée.
